# EUROPÄISCHE PATENTSCHRIFT

(11) **EP 3 201 395 B1**
(45) Veröffentlichungstag und Bekanntmachung des Hinweises auf die Patenterteilung: **30.01.2019**
(21) Anmeldenummer: 15762921.3
(22) Anmeldetag: 07.09.2015
(51) Int. Cl.: E01B 29/46, B23K 37/04, E01B 11/44

(54) **SCHWEISSAGGREGAT**
WELDING UNIT
ENSEMBLE DE SOUDAGE

(30) Priorität: 01.10.2014 AT 7382014
(43) Veröffentlichungstag der Anmeldung: 09.08.2017
(73) Patentinhaber: Plasser & Theurer Export von Bahnbaumaschinen Gesellschaft m.b.H., 1010 Wien (AT)
(72) Erfinder: MÜHLLEITNER, Heinz, A-3100 Neidling (AT)
(86) Internationale Anmeldenummer: PCT/EP2015/001796
(87) Internationale Veröffentlichungsnummer: WO 2016/050337

(56) Entgegenhaltungen:
- EP-A1- 0 566 941
- EP-A1- 0 597 215
- EP-A1- 1 736 602
- WO-A1-2010/063362
- GB-A- 2 510 221
- KR-A- 20110 049 442

## Beschreibung

Die Erfindung betrifft ein Schweißaggregat zum Verschweißen zweier Schienen eines Gleises, mit zwei entlang von Aggregatführungen durch Stauchzylinder in Schienenlängsrichtung zueinander bewegbaren Schienenklemmeinheiten, die jeweils mit paarweise in einer Anpressebene verschiebbaren, um eine Hebelschwenkachse verschwenkbaren und als Klemmhebel ausgebildeten, je eine zur Anlage an einen Schienensteg vorgesehene, an einem von der Hebelschwenkachse distanzierten ersten Hebelende angeordnete, Kontaktfläche aufweisenden Klemmbacken ausgestattet sind, wobei die beiden Kontaktflächen jeder Schienenklemmeinheit jeweils näher zur gegenüberliegenden Schienenklemmeinheit positioniert sind als die beiden Hebelschwenkachsen.

Ein derartiges Schweißaggregat ist durch die WO 2010/063362 A1 bekannt. Auf jeder Schienenklemmeinheit sind zwei linear in der Anpressebene normal zur Schienenlängsrichtung verschiebbare Klemmantriebe für eine Anpressung von Klemmbacken an den Schienensteg vorgesehen.

Gemäß EP 0 597 215 A1 bzw. CH 703 854 A2 sind ebenfalls Schweißaggregate bekannt, bei denen die Klemmbacken durch Verdrehen einer Exzenterwelle an den Schienensteg angepresst werden.

Aus EP 0 566 941 A1, GB 2 510 221 A und KR 20110049442 A sind weitere derartige Schienenziehvorrichtungen bekannt.

Die Aufgabe der vorliegenden Erfindung liegt nun in der Schaffung eines Schweißaggregates der eingangs genannten Art mit einer vereinfachten konstruktiven Ausbildung der Schienenklemmeinheit.

Diese Aufgabe wird erfindungsgemäß mit einem Schweißaggregat der gattungsgemäßen Art durch die im Kennzeichen des Hauptanspruches angeführten Merkmale gelöst.

Mit derartigen konstruktiv einfach auszubildenden Klemmhebeln ist eine sehr hohen Zugkräften problemlos standhaltende Selbstklemmwirkung erzielbar. Damit erübrigen sich groß zu dimensionierende Klemmzylinder, die außerdem zu einer sperrigen Dimensionierung des gesamten Schweißaggregates führen. Die daraus resultierende Größenreduktion des Schweißaggregates ermöglicht auch problemlose Einsätze in räumlich beengten Gleisabschnitten und ergibt außerdem eine geringere Gesamtmasse.

Weitere Vorteile der Erfindung ergeben sich aus den Unteransprüchen und der Zeichnungsbeschreibung.

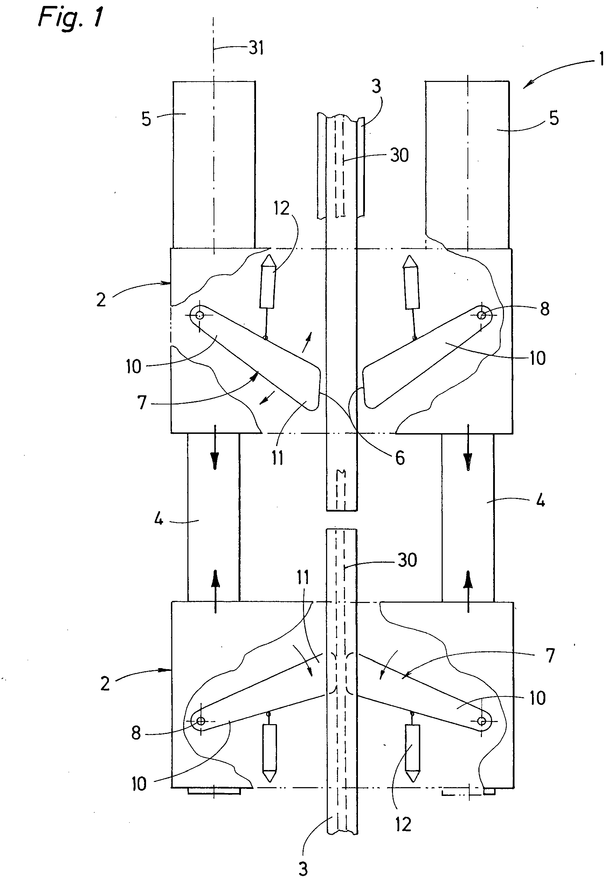

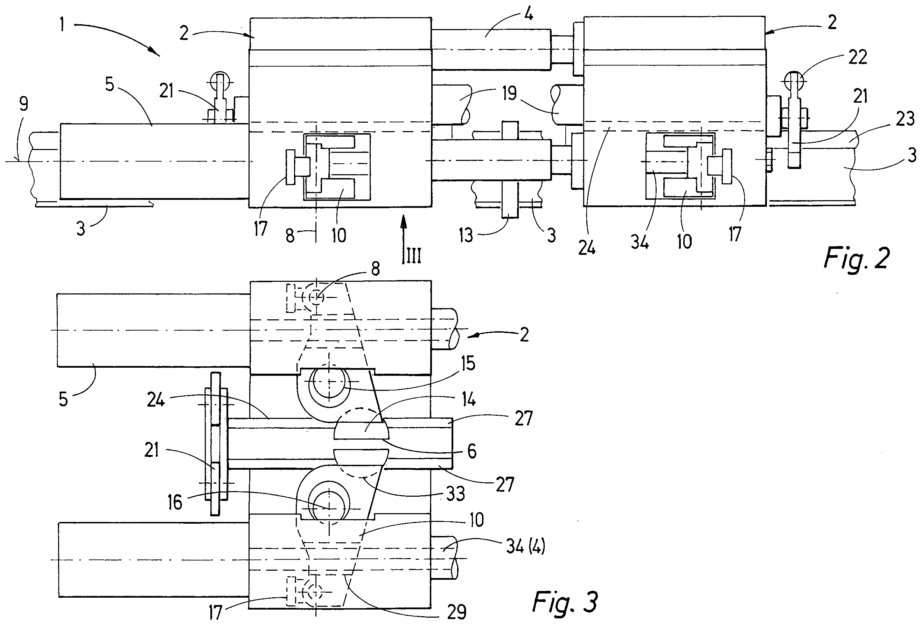

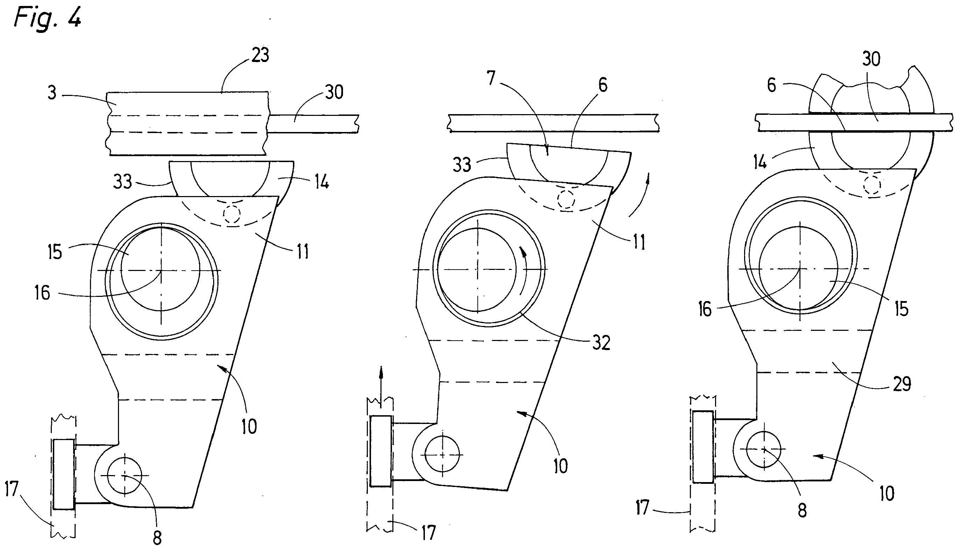

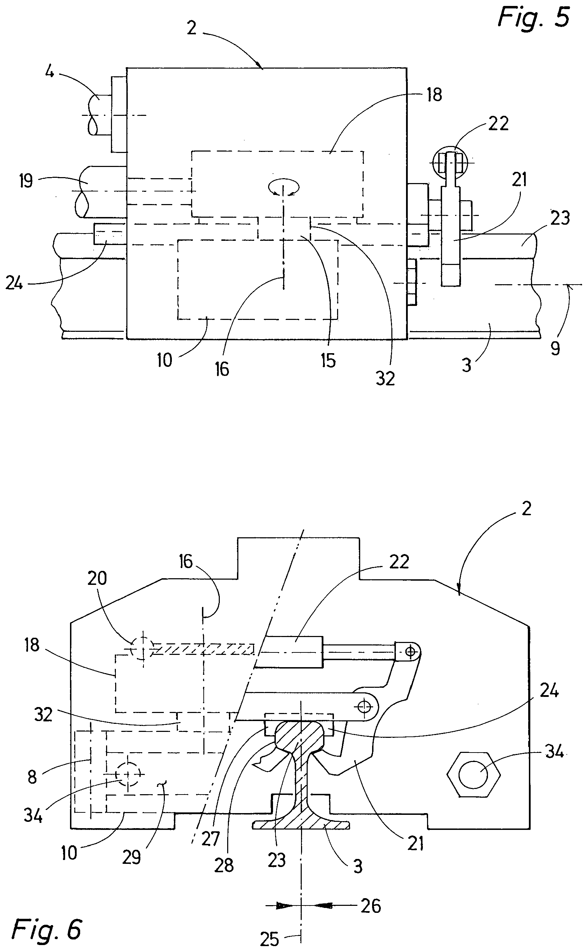

Im Folgenden wird die Erfindung anhand von in der Zeichnung dargestellten Ausführungsbeispielen näher beschrieben. Es zeigen: Fig. 1 eine schematische Draufsicht auf eine konstruktiv stark vereinfachte Ausführung eines Schweißaggregates mit verschwenkbaren Klemmhebeln, Fig. 2 und 3 eine teilweise Seitenansicht bzw. Ansicht (gemäß Pfeil III in Fig. 2) eines weiteren Ausführungsbeispiels, Fig. 4 eine Detailansicht eines Klemmhebels in drei verschiedenen Stellungen, und die Fig. 5 und 6 eine Seitenansicht bzw. eine Ansicht in Schienenlängsrichtung einer Schienenklemmeinheit.

Ein in Fig. 1 in einer prinzipiellen Grundvariante dargestelltes erfindungsgemäßes Schweißaggregat 1 besteht aus zwei in einer Schienenlängsrichtung zueinander bewegbaren Schienenklemmeinheiten 2 zum Verbinden zweier Schienen 3 durch Abbrennstumpfschweißen. Die genannte Verschiebungsbewegung der beiden Schienenklemmeinheiten 2 erfolgt entlang von Aggregatführungen 4 durch hydraulisch beaufschlagbare Stauchzylinder 5. Die Aggregatführungen 4 weisen parallel zur Schienenlängsrichtung verlaufende Führungsachsen 31 auf.

Jede Schienenklemmeinheit 2 ist mit paarweise verschiebbaren, je eine zur Anlage an einen Schienensteg 30 der Schiene 3 vorgesehene Kontaktfläche 6 aufweisenden Klemmbacken 7 ausgestattet. Diese sind jeweils als um eine Hebelschwenkachse 8 in einer zu dieser normalen Anpressebene 9 (s. Fig. 2) verschwenkbare Klemmhebel 10 ausgebildet.

Die zur Anlage an den Schienensteg 30 vorgesehene Kontaktfläche 6 ist an einem von der Hebelschwenkachse 8 distanzierten ersten Hebelende 11 angeordnet, wobei beide Kontaktflächen 6 jeder Schienenklemmeinheit 2 jeweils näher zur gegenüberliegenden Schienenklemmeinheit 2 positioniert sind als die beiden Hebelschwenkachsen 8.

Jeder Klemmhebel 10 ist durch einen auf der Schienenklemmeinheit 2 fixierten Klemmantrieb 12 in der Anpressebene 9 von einer geöffneten Stellung (s. obere Schienenklemmeinheit 2 in Fig. 1) in eine Klemmstellung verschwenkbar (s. untere Schienenklemmeinheit 2). In dieser Klemmstellung kommt es durch das Anpressen der Kontaktfläche 6 an den Schienensteg 30 zu einer Kraftschlussverbindung.

Infolge der durch die beiden Stauchzylinder 5 verursachten Bewegung der Schienenklemmeinheiten 2 zueinander wird die genannte Kraftschlussverbindung im Rahmen eines Selbstklemmeffektes automatisch noch erhöht. Sobald die Schweißung durch Stromzufuhr beendet ist, erfolgt (nach einer hier nicht wesentlichen Abscherung des Schweißwulstes) eine Auseinanderbewegung der beiden Schienenklemmeinheiten 2 in Schienenlängsrichtung, wobei die Klemmwirkung der Klemmhebel 10 durch die zwangsläufig folgende geringfügige Schwenkbewegung automatisch aufgehoben wird. Abschließend erfolgt durch die Beaufschlagung der Klemmantriebe 12 eine weitere Öffnung, um schließlich das Schweißaggregat 1 von der verschweißten Schiene 3 abheben zu können.

Die weiteren Fig. 2 bis 6 zeigen eine bevorzugte Ausführungsform der Erfindung, wobei die funktionsgleichen Teile mit denselben Bezugszeichen wie in Fig. 1 gekennzeichnet sind.

Wie in Fig. 2 ersichtlich, ist zwischen den beiden durch die Stauchzylinder 5 zueinander bewegbaren Schienenklemmeinheiten 2 eine Abschervorrichtung 13 zum Abscheren eines Schweißwulstes vorgesehen.

Abweichend von der in Fig. 1 beschriebenen Variante ist - wie in Fig. 3 und 4 dargestellt - das erste Hebelende 11 als die Kontaktfläche 6 aufweisender Klemmkörper 14 ausgebildet, der relativ zum angrenzenden Abschnitt des Klemmhebels 10 in der Anpressebene 9 geringfügig beweglich ist. Dazu ist der als halbierte Kreisscheibe ausgebildete Klemmkörper 14 über seine halbkreisförmige Gleitfläche 33 drehbar im Klemmhebel 10 gelagert. Über eine Stromzuführung wird für die Schweißung benötigter Strom geliefert.

Wie insbesondere in Verbindung mit Fig. 4 ersichtlich, ist zwischen Klemmkörper 14 und der Hebelschwenkachse 8 ein Hebelexzenter 15 mit einer normal zur Anpressebene 9 verlaufenden Exzenterachse 16 für eine Verschiebung des Klemmhebels 10 relativ zur Schienenklemmeinheit 2 und in der Anpressebene 9 angeordnet. Außerdem ist die Hebelschwenkachse 8 in einer auf der Schienenklemmeinheit 2 angeordneten Hebelgleitbahn 17 (s. Fig. 2 u. 3) parallel zur Anpressebene 9 und relativ zur Schienenklemmeinheit 2 verschiebbar ausgebildet.

Wie insbesondere in Fig. 5 ersichtlich, sind die Hebelexzenter 15 der beiden je einer Schienenklemmeinheit 2 zugeordneten Klemmhebel 10 durch einen die Exzenterachse 16 aufweisenden Bolzen 32 auf einem Hebelschlitten 18 befestigt. Dieser ist durch einen Schlittenantrieb 19 parallel zur Anpressebene 9 und in Schienenlängsrichtung relativ zur Schienenklemmeinheit 2 verschiebbar. Jeder Hebelexzenter 15 ist durch einen am Hebelschlitten 18 befestigten Exzenterantrieb 20 (s. Fig. 6) um die Exzenterachse 16 verdrehbar. Diese Drehbewegung kann beispielsweise durch ein nicht näher dargestelltes Schneckengetriebe zwischen Bolzen 32 und Exzenterantrieb 20 ausgeführt werden.

Wie in Fig. 2, 3 und 6 ersichtlich, ist außerhalb der beiden Schienenklemmeinheiten 2 jeweils eine Schienenfixierzange 21 angeordnet. Diese ist mit einem Zangenantrieb 22 für eine zangenartige Erfassung der entsprechenden Schiene 3 sowie ein Anpressen deren Schienenkopfes 23 an einen Schienenkopfschlitten 24 ausgestattet. Der mit der Schienenfixierzange 21 verbundene Schienenkopfschlitten 24 ist seinerseits mit dem Hebelschlitten 18 verbunden und in einer normal zur Schienenlängsrichtung (bzw. normal zu einer vertikalen Schienensymmetrieebene 25 - s. Fig. 6) verlaufenden Anpressrichtung 26 relativ zum Hebelschlitten 18 und parallel zur Anpressebene 9 verschiebbar. Der Schienenkopfschlitten 24 weist zwei in der Anpressrichtung 26 voneinander distanzierte Anschlagleisten 27 zur Anlage jeweils einer Schienenkopfseitenfläche 28 des Schienenkopfes 23 auf.

Wie insbesondere in Fig. 3 und 6 ersichtlich, weist jeder Klemmhebel 10 eine Öffnung 29 zur Durchführung einer als Aggregatführung 4 dienenden Zugstange 34 auf. Damit kann der Klemmhebel 10 ungehindert relativ zur Schienenklemmeinheit 2 bewegt werden.

Im Folgenden wird nun die Funktionsweise des erfindungsgemäßen Schweißaggregates 1 näher beschrieben.

Zu Beginn des Schweißvorganges wird das Schweißaggregat 1 auf die beiden zu verschweißenden Schienenenden der Schienen 3 abgesenkt, wobei die Klemmhebel 10 so weit geöffnet sind, dass eine problemlose Durchführung des jeweiligen Schienenkopfes 23 möglich ist (s. linke Stellung in Fig. 4). Dies trifft auch auf die beiden Schienenfixierzangen 21 zu.

Unter Beaufschlagung des Zangenantriebes 22 wird die Schienenfixierzange 21 geschlossen (s. Fig. 6), wodurch der Schienenkopf 23 automatisch an den Schienenkopfschlitten 24 angepresst und damit in vertikaler Richtung exakt zentriert wird.

In weiterer Folge werden die Klemmkörper 14 der beiden Klemmhebel 10 jeder Schienenklemmeinheit 2 an den Schienensteg 30 angepresst, indem durch die Schlittenantriebe 19 die beiden Hebelschlitten 18 in Schienenlängsrichtung (bzw. parallel zur Führungsachse 31) voneinander wegbewegt werden. Damit kommt es zwischen Schienensteg 30 und der Kontaktfläche 6 des Klemmkörpers 14 zu einer Kraftschlussverbindung bzw. Grundspannung (s. rechte Stellung in Fig. 4).

Für den Fall, dass nun die beiden zu verschweißenden Schienen 3 bezüglich der Schienenquerrichtung nicht exakt zentriert sind, kann unter Beaufschlagung der beiden Exzenterantriebe 20 einer Schienenklemmeinheit 2 eine Querverschiebung der eingespannten Schiene 3 erreicht werden (s. Fig. 4). Es versteht sich von selbst, dass zur Aufrechterhaltung der Einspannwirkung eine exakt synchrone Querverschiebung der beiden paarweise gegenüberliegenden Klemmhebel 10 zu erfolgen hat. Durch die Querverschiebung des Klemmhebels 10, bei der die genannte Grundspannung immer uneingeschränkt erhalten bleibt, kommt es auch zu einer ausgleichenden Gleitbewegung der Hebelschwenkachse 8 in der Hebelgleitbahn 17 (s. Fig. 4). Es wäre natürlich auch möglich, parallel dazu die Klemmhebel 10 der anderen Schienenklemmeinheit 2 für eine Querzentrierung der zweiten Schiene 3 durch die entsprechenden Exzenterantriebe 20 zu bewegen.

Mit dieser quer zur Schienenlängsrichtung verlaufenden, exakt durchführbaren Zentrierbewegung wird der Schienenkopfschlitten 24 automatisch unter dessen Verschiebung relativ zum Hebelschlitten 18 mitbewegt, wodurch die exakte vertikale Zentrierung beider Schienenenden uneingeschränkt aufrecht erhalten bleibt. Die mit dem Schienenkopfschlitten 24 verbundene Schienenfixierzange 21 wird ebenfalls unter Aufrechterhaltung einer gegen den Schienenkopfschlitten 24 wirkenden Anpresskraft automatisch mitbewegt. Damit ist sichergestellt, dass die Schienen 3 sowohl in vertikaler als auch horizontaler Richtung genau zueinander zentrierbar sind.

In weiterer Folge werden durch die Stauchzylinder 5 die beiden Schienenklemmeinheiten 2 mitsamt den eingespannten Schienen 3 zueinander bewegt, wobei es mit fortschreitendem Verschiebeweg automatisch zu einer zunehmenden Selbstklemmwirkung kommt, mit der die paarweise positionierten Klemmhebel 10 verstärkt an den Schienensteg 30 angepresst werden. Unter Stromzufuhr wird nun die Abbrennstumpfschweißung durchgeführt und schließlich der Schweißwulst durch die Abschervorrichtung 13 abgeschert.

Nach erfolgter Schweißung werden die beiden Schienenklemmeinheiten 2 mithilfe der Stauchzylinder 5 voneinander bewegt, wobei es automatisch zu einer raschen Reduktion der Klemmkraft der sich selbsttätig geringfügig um die Hebelschwenkachse 8 bewegenden Klemmhebel 10 kommt. In weiterer Folge werden die Schlittenantriebe 19 sowie die Exzenterantriebe 20 beaufschlagt, um schließlich mit einer daraus resultierenden maximalen Distanzierung der Klemmhebel 10 voneinander ein problemloses Abheben des Schweißaggregates 1 von der verschweißten Schiene 3 zu ermöglichen. Vorher sind allerdings noch die beiden Schienenfixierzangen 21 zu öffnen.

## Patentansprüche

1. Schweißaggregat (1) zum Verschweißen zweier Schienen (3) eines Gleises, mit zwei entlang von Aggregatführungen (4) durch Stauchzylinder (5) in Schienenlängsrichtung zueinander bewegbaren Schienenklemmeinheiten (2), die jeweils mit paarweise in einer Anpressebene (9) verschiebbaren, um eine Hebelschwenkachse (8) verschwenkbaren und als Klemmhebel (10) ausgebildeten, je eine zur Anlage an einen Schienensteg (30) vorgesehene, an einem von der Hebelschwenkachse (8) distanzierten ersten Hebelende (11) angeordnete, Kontaktfläche (6) aufweisenden Klemmbacken (7) ausgestattet sind, wobei die beiden Kontaktflächen (6) jeder Schienenklemmeinheit (2) jeweils näher zur gegenüberliegenden Schienenklemmeinheit (2) positioniert sind als die beiden Hebelschwenkachsen (8), **dadurch gekennzeichnet, dass** zwischen dem ersten Hebelende (11) und der Hebelschwenkachse (8) ein Hebelexzenter (15) mit einer normal zur Anpressebene (9) verlaufenden Exzenterachse (16) für eine Verschiebung des Klemmhebels (10) relativ zur Schienenklemmeinheit (2) in der Anpressebene (9) angeordnet ist.

2. Schweißaggregat nach Anspruch 1, **dadurch gekennzeichnet, dass** die Hebelschwenkachse (8) in einer auf der Schienenklemmeinheit (2) angeordneten Hebelgleitbahn (17) parallel zur Anpressebene (9) relativ zur Schienenklemmeinheit (2) verschiebbar ausgebildet ist.

3. Schweißaggregat nach Anspruch 1, **dadurch gekennzeichnet, dass** die Hebelexzenter (15) der beiden je einer Schienenklemmeinheit (2) zugeordneten Klemmhebel (10) durch einen die Exzenterachse (16) aufweisenden Bolzen (32) auf einem Hebelschlitten (18) befestigt sind, der durch einen Schlittenantrieb (19) parallel zur Anpressebene (9) und in Schienenlängsrichtung relativ zur Schienenklemmeinheit (2) verschiebbar ist.

4. Schweißaggregat nach Anspruch 2, **dadurch gekennzeichnet, dass** jeder Hebelexzenter (15) durch einen am Hebelschlitten (18) befestigten Exzenterantrieb (20) um die Exzenterachse (16) verdrehbar ist.

5. Schweißaggregat nach Anspruch 3, **dadurch gekennzeichnet, dass** der Hebelschlitten (18) mit einer zum Erfassen einer Schiene (3) ausgebildeten Schienenfixierzange (21) verbunden ist.

6. Schweißaggregat nach Anspruch 3, **dadurch gekennzeichnet, dass** im Hebelschlitten (18) ein zur Anlage eines Schienenkopfes (23) vorgesehener Schienenkopfschlitten (24) angeordnet ist, der parallel zur Anpressebene (9) in einer normal zur Schienenlängsrichtung verlaufenden Anpressrichtung (26) relativ zum Hebelschlitten (18) verschiebbar ist.

7. Schweißaggregat nach Anspruch 6, **dadurch gekennzeichnet, dass** der Schienenkopfschlitten (24) zwei in der Anpressrichtung (26) voneinander distanzierte Anschlagleisten (27) zur Anlage einer Schienenkopfseitenfläche (28) aufweist.

8. Schweißaggregat nach Anspruch 1, **dadurch gekennzeichnet, dass** jeder Klemmhebel (10) eine Öffnung (29) zur Durchführung einer als Aggregatführung (4) dienenden Zugstange (34) aufweist.

## Claims

1. A welding unit (1) for welding together two rails (3) of a track, including two rail clamping assemblies (2) which can be moved towards one another along unit guides (4) in the rail longitudinal direction by means of compression cylinders (5), each rail clamping assembly (2) being equipped with clamping jaws (7) designed as clamping levers (10) which are displaceable in pairs within a pressing plane (9) and pivotable about a lever pivot axis (8) and have in each case a contact surface (6) which is provided for application to a rail web (30) and arranged at a first lever end (11) spaced from the lever pivot axis (8), wherein the two contact surfaces (6) of each rail clamping assembly (2) are positioned in each case closer to the opposite rail clamping assembly (2) than the two lever pivot axes (8), **characterized in that** a lever eccentric cam (15) having an eccentric axis (16) extending perpendicularly to the pressing plane (9) is arranged between the first lever end (11) and the lever pivot axis (8) for displacement of the clamping lever (10) in the pressing plane (9) relative to the rail clamping assembly (2).

2. A welding unit according to claim 1, **characterized in that** the lever pivot axis (8) is designed for displacement in a lever gliding track (17), arranged on the rail clamping assembly (2), parallel to the pressing plane (9) relative to the rail clamping assembly (2).

3. A welding unit according to claim 1, **characterized in that** the lever eccentric cams (15) of the two clamping levers (10) associated in each case with a rail clamping assembly (2) are fastened by means of a bolt (32), comprising the eccentric axis (16), on a lever carriage (18) which is displaceable parallel to the pressing plane (9) and in the rail longitudinal direction relative to the rail clamping assembly (2) by means of a carriage drive (19).

4. A welding unit according to claim 2, **characterized in that** each lever eccentric cam (15) is rotatable about the eccentric axis (16) by means of an eccenter drive (20) fastened to the lever carriage (18).

5. A welding unit according to claim 3, **characterized in that** the lever carriage (18) is connected to rail fixing tongs (21) designed for gripping a rail (3).

6. A welding unit according to claim 3, **characterized in that** a rail head carriage (24) provided for application of a rail head (23) is arranged in the lever carriage (18), the rail head carriage (24) being displaceable relative to the lever carriage (18) parallel to the pressing plane (9) in a pressing direction (26) extending perpendicularly to the rail longitudinal direction.

7. A welding unit according to claim 6, **characterized in that** the rail head carriage (24) has two stop bars (27), spaced from one another in the pressing direction (26), for application of a rail head side surface (28).

8. A welding unit according to claim 1, **characterized in that** each clamping lever (10) has an opening (29) for passage of a pull rod (34) serving as an assembly guide (4).

## Revendications

1. Module de soudure (1) pour la soudure de deux rails (3) d'une voie ferrée, avec deux unités de serrage de rails (2) pouvant être déplacées l'une vers l'autre dans la direction longitudinale de rail le long de guides de module (4) par des cylindres de refoulement (5), lesquelles sont chacune équipées de mâchoires de serrage (7) pouvant être coulissées par paire dans un plan de fermeture (9), pouvant être pivotées autour d'un axe de pivotement de levier (8) et réalisées comme levier de serrage (10), présentant chacune une face de contact (6) prévue pour l'appui sur une âme de rail (30), disposée à une première extrémité de levier (11) écartée de l'axe de pivotement de levier (8), dans lequel les deux faces de contact (6) de chaque unité de serrage de rails (2) sont chacune positionnées plus près de l'unité de serrage de rails opposée (2) que les deux axes de pivotement de levier (8), **caractérisé en ce qu'**un excentrique de levier (15) avec un axe d'excentrique (16) s'étendant perpendiculairement au plan de fermeture (9) pour un coulissement du levier de serrage (10) par rapport à l'unité de serrage de rails (2) dans le plan de fermeture (9) est disposé entre la première extrémité de levier (11) et l'axe de pivotement de levier (8).

2. Module de soudure selon la revendication 1, **caractérisé en ce que** l'axe de pivotement de levier (8) est réalisé de manière à pouvoir être coulissé dans une voie de glissement de levier (17) disposée sur l'unité de serrage de rails (2) parallèlement au plan de fermeture (9) par rapport à l'unité de serrage de rails (2).

3. Module de soudure selon la revendication 1, **caractérisé en ce que** les excentriques de levier (15) des deux leviers de serrage (10) associés chacun à une unité de serrage de rails (2) sont fixés par un boulon (32) présentant l'axe d'excentrique (16) sur un chariot de levier (18) qui peut être coulissé par un entraînement de chariot (19) parallèlement au plan de fermeture (9) et dans la direction longitudinale de rail par rapport à l'unité de serrage de rails (2).

4. Module de soudure selon la revendication 2, **caractérisé en ce que** chaque excentrique de levier (15) peut être tourné autour de l'axe d'excentrique (16) par un entraînement d'excentrique (20) fixé au chariot de levier (18).

5. Module de soudure selon la revendication 3, **caractérisé en ce que** le chariot de levier (18) est relié à une tenaille de fixation de rails (21) réalisée pour la saisie d'un rail (3).

6. Module de soudure selon la revendication 3, **caractérisé en ce qu'**un chariot de tête de rail (24) prévu pour l'appui d'une tête de rail (23) est disposé dans le chariot de levier (18), lequel peut être coulissé parallèlement au plan de fermeture (9) dans une direction de fermeture (26) s'étendant perpendiculairement à la direction longitudinale de rail par rapport au chariot de levier (18).

7. Module de soudure selon la revendication 6, **caractérisé en ce que** le chariot de tête de rail (24) présente deux barres d'arrêt (27) écartées l'une de l'autre dans la direction de fermeture (26) pour l'appui d'une face latérale de tête de rail (28).

8. Module de soudure selon la revendication 1, **caractérisé en ce que** chaque levier de serrage (10) présente une ouverture (29) pour le passage d'une barre de traction (34) servant de guide de module (4).
